# EUROPÄISCHE PATENTSCHRIFT

(11) **EP 2 984 446 B1**
(45) Veröffentlichungstag und Bekanntmachung des Hinweises auf die Patenterteilung: **08.03.2017**
(21) Anmeldenummer: 14766420.5
(22) Anmeldetag: 08.09.2014
(51) Int. Cl.: G01B 13/00, G01B 13/10

(54) **VORRICHTUNG ZUR PNEUMATISCHEN OBJEKTVERMESSUNG**
DEVICE FOR THE PNEUMATIC MEASUREMENT OF AN OBJECT
DISPOSITIF DE MESURE PNEUMATIQUE D'UN OBJET

(30) Priorität: 18.09.2013 DE 102013218731
(43) Veröffentlichungstag der Anmeldung: 17.02.2016
(73) Patentinhaber: STOTZ FEINMESSTECHNIK GmbH, D-70839 Gerlingen (DE)
(72) Erfinder: STAMENKOVIC, Milan, 70469 Stuttgart (DE)
(74) Vertreter: Manitz, Finsterwald & Partner GbR
(86) Internationale Anmeldenummer: PCT/EP2014/069112
(87) Internationale Veröffentlichungsnummer: WO 2015/039917

(56) Entgegenhaltungen:
- DE-A1- 2 216 679
- US-A- 4 794 786

## Beschreibung

Die vorliegende Erfindung betrifft eine Vorrichtung zur pneumatischen Objektvermessung mit wenigstens einer Messdüse, die über eine Messleitung von einer Druckluftquelle gespeist ist, einem in die Messleitung integrierten pneumatischen Wandler, der dazu ausgebildet ist, anhand eines Drucks in der Messleitung ein elektrisches Ausgangssignal zu erzeugen, das einen Abstand der Messdüse von einem Wandabschnitt eines zu vermessenden Objekts angibt, und einem stromaufwärts des pneumatischen Wandlers in der Messleitung angeordneten Schaltelement, welches in einen eine Fluidverbindung zwischen der Druckluftquelle und der Messdüse freigebenden Freigabezustand und in einen die Fluidverbindung zwischen der Druckluftquelle und der Messdüse sperrenden Sperrzustand schaltbar ist, wobei eine stromaufwärts des Schaltelements von der Messleitung abzweigende und wenigstens ein Drosselelement aufweisende Niederdruckleitung vorgesehen ist, um das Vorhandensein eines zu vermessenden Objekts im Bereich der Messdüse mittels einer pneumatischen Messung unter gegenüber einer Objektvermessung verringertem Druck zu detektieren.

Pneumatische Objektvermessungsgeräte werden auf vielen Gebieten der Technik eingesetzt, beispielsweise bei der Qualitätsprüfung von Innen- oder Außendurchmessern sowie bei 2D- und 3D-Form- und -Lagemessungen. Das Schaltelement dient dazu, die Luftversorgung der Messdüse in den Messpausen zu unterbrechen, um den kostspieligen Luftverlust einzuschränken. Da die Erfahrung gezeigt hat, dass ein handbetätigtes Schaltelement von den Bedienern aus Bequemlichkeit häufig nicht genutzt wird, beruht die Betätigung des Schaltelements bevorzugt auf einer automatischen Werkstückerkennung. Diese kann wie die eigentliche Vermessung pneumatisch erfolgen, nämlich über die Niederdruckleitung, welche bei geschlossenem Schaltelement eine Bypass-Leitung zur Messleitung bildet und ein Vorhandensein eines Werkstücks an der Messposition bei verringertem Druck und somit unter verringertem Luftverlust detektieren kann. In der DE 2 216 679 ist eine derartige Vorrichtung beschrieben, wobei die Niederdruckleitung zu einer separaten Signaldüse führt, welche einen gegenüber der Messdüse verringerten Querschnitt aufweist. Das Schaltelement ist pneumatisch mit der Niederdruckleitung verbunden und wird durch diese gesteuert.

Das Bereitstellen zweier paralleler Leitungen, welche üblicherweise von entsprechenden Basisabschnitten des Geräts bis zu einem entfernt angeordneten Messkopf zu führen sind, ist mit einem zusätzlichen Herstellungsaufwand verbunden. Außerdem beanspruchen die Komponenten des Niederdrucksystems relativ viel Bauraum, vor allem auch durch die zusätzliche Signaldüse im Messmittel, so dass möglicherweise weitere Messdüsen dort nicht untergebracht werden können.

Es besteht daher der Wunsch, bei pneumatischen Objektvermessungsgeräten mit automatischer Werkstückerkennung eine einfachere und kostengünstigere Konstruktion zu ermöglichen.

Die Lösung dieser Aufgabe erfolgt durch eine Vorrichtung mit den Merkmalen des Anspruchs 1.

Erfindungsgemäß ist vorgesehen, dass die Niederdruckleitung zwischen dem Schaltelement und dem pneumatischen Wandler in die Messleitung mündet, wobei das Schaltelement elektrisch ansteuerbar ist und eine elektronische Steuereinrichtung vorgesehen ist, die dazu ausgebildet ist, das Schaltelement in Abhängigkeit von einem Ausgangssignal des pneumatischen Wandlers zwischen dem Freigabezustand und dem Sperrzustand hin- und herzuschalten.

Durch Vereinigen der Niederdruckleitung mit der Messleitung an einer stromaufwärts des pneumatischen Wandlers gelegenen Stelle wird die Möglichkeit eröffnet, die Messleitung selbst bei verringertem Druck zur Werkstückerkennung zu nutzen. Es ist dann lediglich eine Leitung, nämlich die Messleitung, von dem Wandler bis zum Messkopf zu führen, sodass sich der Aufbau des Geräts erheblich vereinfacht. Auch das Bereitstellen einer eigenständigen Signaldüse für die Werkstückerkennung entfällt. Ein besonderer Vorteil ist darin zu sehen, dass in einer erfindungsgemäßen Vorrichtung bestehende Messmittel, welche nicht mit Signaldüsen ausgestattet sind, problemlos eingesetzt werden können.

Weiterbildungen der Erfindung sind in den abhängigen Ansprüchen, der Beschreibung sowie den beigefügten Zeichnungen angegeben.

Gemäß einer Ausführungsform der Erfindung ist die Vorrichtung zu einer Objektvermessung in einzelnen aufeinanderfolgenden Messvorgängen ausgebildet, wobei die Steuereinrichtung dazu ausgebildet ist, das Schaltelement nach jedem abgeschlossenen Messvorgang in den Sperrzustand zu schalten. Es wird also nicht etwa erst gewartet, bis sich das Werkstück und die Messdüse voneinander entfernt haben. Auf diese Weise wird der Luftverlust minimiert.

Die Steuereinrichtung kann auch dazu ausgebildet sein, das Schaltelement ausgehend von dem Sperrzustand wieder in den Freigabezustand zu schalten, wenn das Ausgangssignal des pneumatischen Wandlers einen Schwellwert unterschreitet. Das Unterschreiten des Schwellwerts signalisiert, dass sich ein Messobjekt nahe an der Messdüse befindet. Sobald also ein neu zu vermessendes Werkstück an der Messdüse positioniert ist, wird der pneumatische Wandler unter den regulären Messdruck gesetzt, sodass eine entsprechend exakte Vermessung erfolgen kann. Vorzugsweise wird nach dem Schalten des Schaltelements in den Freigabezustand das Verstreichen einer vorbestimmten Zeitdauer abgewartet, bevor ein von dem pneumatischen Wandler ausgegebener Messwert übernommen und in einem Speicher abgelegt wird. Alternativ könnte die Steuereinrichtung auch derart ausgebildet sein, dass eine Messwertübernahme unabhängig von einer verstrichenen Zeitdauer erst dann erfolgt, wenn eine zeitliche Änderungsrate des Ausgangssignals einen Schwellwert unterschreitet. Durch beide vorstehend genannte Maßnahmen ist sichergestellt, dass eine Messung erst erfolgt, wenn sich die Messverhältnisse stabilisiert oder "beruhigt" haben.

Es ist bevorzugt, dass das Schaltelement, der pneumatische Wandler und die elektronische Steuereinrichtung in einem gemeinsamen Gehäuse untergebracht sind. Dies ermöglicht eine besonders kompakte Bauweise.

Die Niederdruckleitung kann ebenfalls vollständig in dem Gehäuse untergebracht sein, sodass deren Vorhandensein von außen überhaupt nicht zu erkennen ist. Ein solches Gehäuse ist kompatibel mit allen gängigen Messköpfen.

Eine weitere Ausführungsform der Erfindung sieht vor, dass die Messdüse in einem von dem Gehäuse getrennten Messkopf, insbesondere in einem Messdorn oder Messring, angeordnet ist. Der Messkopf kann über einen flexiblen, die Messleitung beinhaltenden Schlauch mit einem Basisgehäuse des Geräts verbindbar sein. Eine separate Signalleitung ist nicht erforderlich.

In einem solchen Messkopf können auch zwei gegenüberliegende Messdüsen angeordnet sein, um z.B. das Vermessen von Bohrungen zu erleichtern.

Gemäß einer speziellen Ausgestaltung ist das Schaltelement als Magnetventil ausgeführt. Ein solches Magnetventil ist einfach ansteuerbar und schnell schaltbar.

Vorzugsweise ist dem pneumatischen Wandler ein Signalverstärker zum elektronischen Verstärken des Ausgangssignals zugeordnet. Dadurch wird es möglich, im Niederdrucksystem mit besonders geringem Druck zu arbeiten und dennoch das Vorhandensein eines Werkstücks an der Messdüse zuverlässig zu erkennen.

Das Drosselelement der Niederdruckleitung kann verstellbar sein, um eine Anpassung der Werkstückerkennung an unterschiedliche Anwendungssituationen zu ermöglichen.

Die Erfindung wird nachfolgend beispielhaft unter Bezugnahme auf die Zeichnungen beschrieben.
- Fig. 1: zeigt eine Vorrichtung zur pneumatischen Objektvermessung gemäß dem Stand der Technik.
- Fig. 2: zeigt eine erfindungsgemäße Vorrichtung zur pneumatischen Objektvermessung.
- Fig. 3: ist eine andere Darstellung der in Fig. 2 gezeigten Vorrichtung.

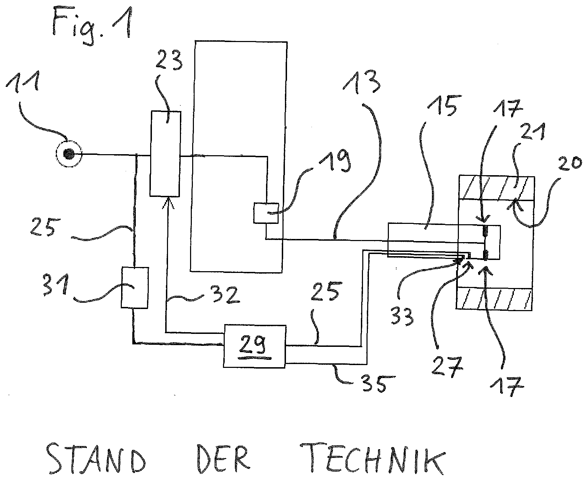

Die in Fig. 1 dargestellte, gemäß dem Stand der Technik gestaltete Vorrichtung zur pneumatischen Objektvermessung umfasst eine Druckluftquelle 11 und eine an diese angeschlossene Messleitung 13, welche zu einem Messkopf 15 führt. Der Messkopf 15 ist hier als Messdorn zum Vermessen von Innendurchmessern ausgeführt und weist ein Paar von Messdüsen 17 auf, welche voneinander weg gerichtet sind. Ein in die Messleitung 13 integrierter pneumatischer Wandler 19 dient dazu, in grundsätzlich bekannter Weise anhand eines Drucks in der Messleitung 13 ein elektrisches Ausgangssignal zu erzeugen, das einen Abstand der Messdüsen 17 von einer benachbarten Wand angibt. In Fig. 1 ist der Messkopf 15 in eine Bohrung 20 eines Werkstücks 21 eingeführt gezeigt. Durch Auswerten des elektrischen Ausgangssignals kann der Durchmesser der Bohrung 20 überprüft werden.

Um in den Messpausen zwischen aufeinanderfolgenden Messvorgängen die Druckluftzufuhr zu den Messdüsen 17 unterbrechen zu können, ist ein Schaltelement 23 in Form eines Ventils an einer stromaufwärts des pneumatischen Wandlers 19 gelegenen Stelle in die Messleitung 13 integriert. Das Schaltelement 23 steht mit der Auswertungseinheit 29 eines Systems zur automatischen Werkstückerkennung in Verbindung. Der Auswertungseinheit 29 ist eine Niederdruckleitung 25 zugeordnet, welche über einen Druckminderer 31 an die Druckluftquelle 11 angeschlossen ist. Die Niederdruckleitung 25 führt zu dem Messkopf 15 und mündet dort in eine Signaldüse 27, welche einen gegenüber den Messdüsen 17 verringerten Durchmesser aufweist. Mittels einer pneumatischen Steuerleitung 32 kann das Schaltelement 23 in der Weise angesteuert werden, dass die Messdüsen 17 lediglich dann über die Messleitung 13 mit Druckluft versorgt werden, wenn der Messkopf 15 in eine zu vermessende Bohrung 20 eingeführt ist. Zusätzlich ist zur Werkstückerkennung ein Näherungssensor 33 in den Messkopf 15 integriert, welcher über eine elektrische Signalleitung 35 mit der Auswertungseinheit 29 verbunden ist.

Aufgrund des Druckminderers 31 erfolgt die Werkstückerkennung mittels der Signaldüse 27 bei verringertem Druck und somit unter verringertem Luftverlust. Beispielsweise weisen Vorrichtungen wie die in Fig. 1 gezeigte einen Messdruck von etwa 3 bar und einen Signaldruck zur Werkstückerkennung von etwa 0,1 bar auf.

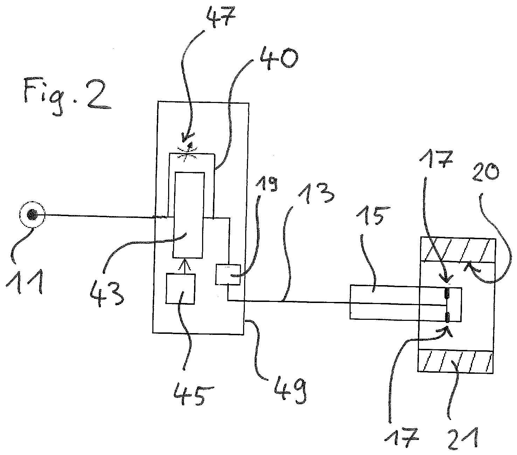

Fig. 2 zeigt eine erfindungsgemäße Vorrichtung zur pneumatischen Objektvermessung, welche im Prinzip ähnlich gestaltet ist wie die in Fig. 1 dargestellte Messvorrichtung. Demgemäß sind gleich wirkende Bauteile mit den gleichen Bezugszeichen versehen. Bei der erfindungsgemäßen Vorrichtung ist jedoch die Niederdruckleitung 40 nicht bis zum Messkopf 15 geführt. Sie mündet vielmehr stromaufwärts des pneumatischen Wandlers 19 in die Messleitung 13, überbrückt also lediglich das Schaltelement 43. Weiterhin ist das Schaltelement 43 als elektrisch ansteuerbares Magnetventil ausgeführt, welches in elektrischer Verbindung mit einer elektronischen Steuereinrichtung 45 steht. Die elektronische Steuereinrichtung 45 steht in elektrischer Verbindung mit dem pneumatischen Wandler 19 und ist dazu ausgebildet, das Schaltelement 43 in Abhängigkeit von einem Ausgangssignal des pneumatischen Wandlers 19 wahlweise auf Durchgang zu schalten oder zu sperren. Um hierbei auch bei relativ schwachen Ausgangssignalen arbeiten zu können, ist dem pneumatischen Wandler 19 ein in Fig. 2 nicht dargestellter Signalverstärker zum elektronischen Verstärken des Ausgangssignals zugeordnet.

Wie dargestellt sind das Schaltelement 43, der pneumatische Wandler 19 und die elektronische Steuereinrichtung 45 in einem gemeinsamen Gehäuse 49 untergebracht. Auch die Niederdruckleitung 40 ist vollständig innerhalb des Gehäuses 49 angeordnet.

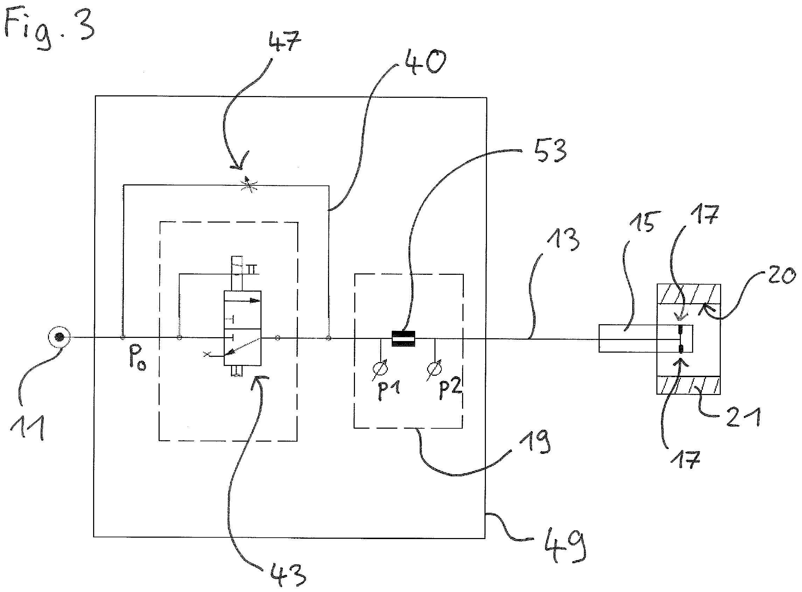

Aus der detaillierten Darstellung gemäß Fig. 3 geht hervor, dass der pneumatische Wandler 19 eine Messdrossel 53 sowie zwei Drucksensoren p1 und p2 beinhaltet. Die pneumatische Messung beruht letztlich auf einer Ermittlung eines Druckabfalls über der Messdrossel 53, wobei der pneumatische Wandler 19 ein elektrisches Ausgangssignal erzeugt, welches proportional zu diesem Druckabfall im Verhältnis zum Eingangsdruck p1 des pneumatischen Wandlers 19 ist.

Im Folgenden wird ein beispielhafter Betriebsablauf der in Fig. 2 und 3 gezeigten Vorrichtung ausgehend von einem Ruhezustand mit abgestellter Messluft beschrieben. In diesem Ruhezustand ist das Schaltelement 43 wie in Fig. 3 dargestellt auf Sperren geschaltet und der an der Messdrossel 53 anliegende Eingangsdruck p1 beträgt nur ein Bruchteil des Versorgungsdrucks p0, insbesondere weniger als 10% des Versorgungsdrucks p0, beispielsweise etwa 0,1 bar. Der Betrag des zur Werkstückerkennung eingesetzten Niederdrucks kann mittels eines verstellbaren Drosselelements 47 reguliert werden.

Wenn der Messkopf 15 nicht in eine Bohrung 20 eingeführt ist, ist der stromabwärts der Messdrossel 53 herrschende Ausgangsdruck p2 beträchtlich geringer als der Eingangsdruck p1 und die Druckdifferenz p1-p2 weist einen verhältnismäßig hohen Wert auf. In diesem Zustand, welcher gewissermaßen einem "Warten auf das Werkstück 21" entspricht, wird das Ausgangssignal des pneumatischen Wandlers 19 durch die elektronische Steuereinrichtung 45 fortwährend überwacht.

Wenn der Messkopf 15 in eine Bohrung 20 eingeführt wird, steigt der Ausgangsdruck p2 an und die Druckdifferenz p1-p2 sinkt dementsprechend. Sobald die Druckdifferenz p1-p2 einen Schwellwert unterschreitet, steuert die elektronische Steuereinrichtung 45 das Schaltelement 43 an und sorgt für dessen Öffnung. Der Eingangsdruck p1 wächst dementsprechend an, bis nahezu der von der Druckluftquelle 11 bereitgestellte Druck p0 erreicht ist. Die elektronische Steuereinrichtung 45 wartet nun, bis eine vorbestimmte Beruhigungszeitdauer seit Öffnung des Schaltelements 43 verstrichen ist. Erst nach Ablauf der Beruhigungszeitdauer wird die eigentliche Messung durchgeführt und der betreffende Messwert wird in einer Speichereinrichtung abgelegt. Unmittelbar anschließend wird das Schaltelement 43 wieder geschlossen, was einem Abschalten der Messluft entspricht. Der Eingangsdruck p1 sinkt wieder auf etwa 0,1 bar. Nun kann der Messkopf 15 - vorzugsweise nach Ablauf einer weiteren vorbestimmten Zeitdauer - aus der Bohrung 20 des Werkstücks 21 herausgeführt werden. Das Werkstück 21 wird dann entfernt und ein neues Werkstück 21 wird bereitgestellt. Sobald der Messkopf 15 in die Bohrung 20 des neuen Werkstücks 21 eingeführt ist, kann der vorstehend beschriebene Ablauf von neuem beginnen.

Der Betriebsablauf wurde für das Beispiel aufeinanderfolgender Einzelmessungen beschrieben. Grundsätzlich ist die in Fig. 2 und 3 gezeigte Vorrichtung auch für dynamische Messungen geeignet, wobei gegebenenfalls von einem Abschalten der Messluft nach jeder Messwertübernahme abzusehen ist.

Die Erfindung ermöglicht die Bereitstellung eines besonders kompakten und einfach handzuhabenden pneumatischen Objektvermessungsgeräts, welches eine automatische Messluftabschaltung aufweist und mit dem sowohl Innen- und Außendurchmesser-Vermessungen als auch Form- und Lagemessungen durchgeführt werden können.

### Bezugszeichenliste:

- 11: Druckluftquelle
- 13: Messleitung
- 15: Messkopf
- 17: Messdüse
- 19: pneumatischer Wandler
- 20: Bohrung
- 21: Werkstück
- 23: Schaltelement
- 25: Niederdruckleitung
- 27: Signaldüse
- 29: Auswertungseinheit
- 31: Druckminderer
- 32: pneumatische Steuerleitung
- 33: Näherungssensor
- 35: elektrische Signalleitung
- 40: Niederdruckleitung
- 43: Schaltelement
- 45: elektronische Steuereinrichtung
- 47: verstellbares Drosselelement
- 49: Gehäuse
- 53: Messdrossel

- p0: von der Druckluftquelle bereitgestellter Druck
- p1: Eingangsdruck
- p2: Ausgangsdruck

## Patentansprüche

1. Vorrichtung zur pneumatischen Objektvermessung mit wenigstens einer Messdüse (17), die über eine Messleitung (13) von einer Druckluftquelle (11) gespeist ist, einem in die Messleitung (13) integrierten pneumatischen Wandler (19), der dazu ausgebildet ist, anhand eines Drucks in der Messleitung (13) ein elektrisches Ausgangssignal zu erzeugen, das einen Abstand der Messdüse (17) von einem Wandabschnitt eines zu vermessenden Objekts (21) angibt, und einem stromaufwärts des pneumatischen Wandlers (19) in der Messleitung (13) angeordneten Schaltelement (23, 43), welches in einen eine Fluidverbindung zwischen der Druckluftquelle (11) und der Messdüse (17) freigebenden Freigabezustand und in einen die Fluidverbindung zwischen der Druckluftquelle (11) und der Messdüse (17) sperrenden Sperrzustand schaltbar ist, wobei eine stromaufwärts des Schaltelements (23, 43) von der Messleitung (13) abzweigende und wenigstens ein Drosselelement (31, 47) aufweisende Niederdruckleitung (25, 40) vorgesehen ist, um das Vorhandensein eines zu vermessenden Objekts (21) im Bereich der Messdüse (17) mittels einer pneumatischen Messung unter gegenüber einer Objektvermessung verringertem Druck zu detektieren,
**dadurch gekennzeichnet, dass**
die Niederdruckleitung (40) zwischen dem Schaltelement (43) und dem pneumatischen Wandler (19) in die Messleitung (13) mündet, wobei das Schaltelement (43) elektrisch ansteuerbar ist und eine elektronische Steuereinrichtung (45) vorgesehen ist, die dazu ausgebildet ist, das Schaltelement (43) in Abhängigkeit von einem Ausgangssignal des pneumatischen Wandlers (19) zwischen dem Freigabezustand und dem Sperrzustand hin- und herzuschalten.

2. Vorrichtung nach Anspruch 1,
**dadurch gekennzeichnet, dass**
die Vorrichtung zu einer Objektvermessung in einzelnen aufeinanderfolgenden Messvorgängen ausgebildet ist, wobei die Steuereinrichtung (45) dazu ausgebildet ist, das Schaltelement (43) nach jedem abgeschlossenen Messvorgang in den Sperrzustand zu schalten.

3. Vorrichtung nach Anspruch 2,
**dadurch gekennzeichnet, dass**
die Steuereinrichtung (45) dazu ausgebildet ist, das Schaltelement (43) ausgehend von dem Sperrzustand wieder in den Freigabezustand zu schalten, wenn das Ausgangssignal des pneumatischen Wandlers (19) einen Schwellwert unterschreitet.

4. Vorrichtung nach einem der vorstehenden Ansprüche,
**dadurch gekennzeichnet, dass**
das Schaltelement (43), der pneumatische Wandler (19) und die elektronische Steuereinrichtung (45) in einem gemeinsamen Gehäuse (49) untergebracht sind.

5. Vorrichtung nach Anspruch 4,
**dadurch gekennzeichnet, dass**
die Niederdruckleitung (40) ebenfalls vollständig in dem Gehäuse (49) untergebracht ist.

6. Vorrichtung nach Anspruch 4 oder 5,
**dadurch gekennzeichnet, dass**
die Messdüse (17) in einem von dem Gehäuse (49) getrennten Messkopf (15), insbesondere in einem Messdorn oder Messring, angeordnet ist.

7. Vorrichtung nach Anspruch 6,
**dadurch gekennzeichnet, dass**
in dem Messkopf (15) zwei gegenüberliegende Messdüsen (17) angeordnet sind.

8. Vorrichtung nach einem der vorstehenden Ansprüche,
**dadurch gekennzeichnet, dass**
das Schaltelement (43) als Magnetventil ausgeführt ist.

9. Vorrichtung nach einem der vorstehenden Ansprüche,
**dadurch gekennzeichnet, dass**
dem pneumatischen Wandler (19) ein Signalverstärker zum elektronischen Verstärken des Ausgangssignals zugeordnet ist.

10. Vorrichtung nach einem der vorstehenden Ansprüche,
**dadurch gekennzeichnet, dass**
das Drosselelement (47) der Niederdruckleitung (40) verstellbar ist.

## Claims

1. An apparatus for the pneumatic measurement of an object, comprising at least one measurement nozzle (17) which is fed from a compressed air source (11) via a measurement line (13); a pneumatic converter (19) which is integrated into the measurement line (13) and which is configured to generate an electrical output signal based on a pressure in the measurement line (13), said electrical output signal indicating a spacing of the measurement nozzle (17) from a wall section of an object (21) to be measured; and a switching element (23, 43) which is arranged upstream of the pneumatic converter (19) in the measurement line (13) and which can be switched into a release state releasing a fluid connection between the compressed air source (11) and the measurement nozzle (17) and into a blocking state blocking the fluid connection between the compressed air source (11) and the measurement nozzle (17), wherein a low-pressure line (25, 40) which branches off from the measurement line (13) upstream of the switching element (23, 43) and which has at least one restrictor element (31, 47) is provided to detect the presence of an object (21) to be measured in the region of the measurement nozzle (17) by means of a pneumatic measurement at a pressure reduced with respect to an object measurement,
**characterized in that**
the low-pressure line (40) opens into the measurement line (13) between the switching element (43) and the pneumatic converter (19), wherein the switching element (43) is electrically controllable and an electronic control device (45) is provided which is configured to switch the switching element (43) to and fro between the release state and the blocking state in dependence on an output signal of the pneumatic converter (19).

2. An apparatus in accordance with claim 1,
**characterized in that**
the apparatus is configured for an object measurement in individual consecutive measurement procedures, wherein the control device (45) is configured to switch the switching element (43) into the blocking state after every completed measurement procedure.

3. An apparatus in accordance with claim 2,
**characterized in that**
the control device (45) is configured to switch the switching element (43) back into the release state, starting from the blocking state, when the output signal of the pneumatic converter (19) falls below a threshold value.

4. An apparatus in accordance with any one of the preceding claims,
**characterized in that**
the switching element (43), the pneumatic converter (19) and the electronic control device (45) are accommodated in a common housing (49).

5. An apparatus in accordance with claim 4,
**characterized in that**
the low-pressure line (40) is likewise completely accommodated in the housing (49).

6. An apparatus in accordance with claim 4 or claim 5,
**characterized in that**
the measurement nozzle (17) is arranged in a measurement head (15) separate from the housing (49), in particular in a measurement mandrel or measurement ring.

7. An apparatus in accordance with claim 6,
**characterized in that**
two oppositely disposed measurement nozzles (17) are arranged in the measurement head (15).

8. An apparatus in accordance with any one of the preceding claims,
**characterized in that**
the switching element (43) is configured as a solenoid valve.

9. An apparatus in accordance with any one of the preceding claims,
**characterized in that**
a signal amplifier is associated with the pneumatic converter (19) for the electronic amplification of the output signal.

10. An apparatus in accordance with any one of the preceding claims,
**characterized in that**
the restrictor element (47) of the low-pressure line (40) is adjustable.

## Revendications

1. Dispositif de mesurage pneumatique d'un objet, comportant au moins une buse de mesure (17) qui est alimentée par une source d'air comprimé (11) via une conduite de mesure (13), un convertisseur pneumatique (19) intégré dans la conduite de mesure (13) et conçu pour générer un signal de sortie électrique en se basant sur la pression dans la conduite de mesure (13), signal qui indique une distance de la buse de mesure (17) par rapport à une portion de paroi d'un objet à mesurer (21), un élément de commutation (23, 43) agencé en amont du convertisseur pneumatique (19) dans la conduite de mesure (13), élément qui est commutable dans un état de libération libérant une communication fluidique entre la source d'air comprimé (11) et la buse de mesure (17) et dans un état de blocage bloquant la communication fluidique entre la source d'air comprimé (11) et la buse de mesure (17), dans lequel est prévue au moins une conduite à basse pression (25, 40) qui est ramifiée de la conduite de mesure (13) en amont de l'élément de commutation (23, 43) et qui présente au moins un élément d'étranglement (31, 47), afin de détecter la présence d'un objet à mesurer (21) au niveau de la buse de mesure (17) au moyen d'un mesurage pneumatique sous une pression réduite par rapport au mesurage de l'objet,
**caractérisé en ce que**
la conduite à basse pression (40) débouche dans la conduite de mesure (13) entre l'élément de commutation (43) et le convertisseur pneumatique (19), l'élément de commutation (43) étant pilotable par voie électrique, et il est prévu un moyen de commande électronique (45) qui est conçu pour commuter l'élément de commutation (43) entre l'état de libération et l'état de blocage en fonction d'un signal de sortie du convertisseur pneumatique (19).

2. Dispositif selon la revendication 1,
**caractérisé en ce que**
le dispositif est réalisé pour le mesurage d'un objet en opérations de mesure individuelles successives, le moyen de commande (45) étant réalisé pour commuter l'élément de commutation (43) vers l'état de blocage après chaque opération de mesure terminée.

3. Dispositif selon la revendication 2,
**caractérisé en ce que**
le dispositif de commande (45) est conçu pour re-commuter l'élément de commutation (43) depuis l'état de blocage vers l'état de libération lorsque le signal de sortie du convertisseur pneumatique (19) passe au-dessous d'une valeur seuil.

4. Dispositif selon l'une des revendications précédentes,
**caractérisé en ce que**
l'élément de commutation (43), le convertisseur pneumatique (19) et le moyen de commande électronique (45) sont logés dans un boîtier commun (49).

5. Dispositif selon la revendication 4,
**caractérisé en ce que**
la conduite à basse pression (40) est également logée complètement dans le boîtier (49).

6. Dispositif selon la revendication 4 ou 5,
**caractérisé en ce que**
la buse de mesure (17) est agencée dans une tête de mesure (15) séparée du boîtier (49), en particulier dans un mandrin de mesure ou dans un anneau de mesure.

7. Dispositif selon la revendication 6,
**caractérisé en ce que**
deux buses de mesure opposées (17) sont agencées dans la tête de mesure (15).

8. Dispositif selon l'une des revendications précédentes,
**caractérisé en ce que**
l'élément de commutation (43) est réalisé sous forme d'électrovanne.

9. Dispositif selon l'une des revendications précédentes,
**caractérisé en ce que**
un amplificateur de signal pour l'amplification électronique du signal de sortie est associé au convertisseur pneumatique (19).

10. Dispositif selon l'une des revendications précédentes,
**caractérisé en ce que**
l'élément d'étranglement (47) de la conduite à basse pression (40) est réglable.
